# EUROPEAN PATENT APPLICATION

(11) **EP 4 318 021 A1**
(43) Date of publication of application: **07.02.2024**
(21) Application number: 22775244.1
(22) Date of filing: 14.03.2022
(51) Int. Cl.: G01S 7/03, G01S 13/931

(54) **ELECTRONIC DEVICE**

(30) Priority: 26.03.2021 JP 2021054213
(71) Applicant: Kyocera Corporation, Kyoto-shi Kyoto 612-8501 (JP)
(72) Inventor: KAWAJI Satoshi, Kyoto-shi, Kyoto 612-8501 (JP); NISHIKIDO Masamitsu, Kyoto-shi, Kyoto 612-8501 (JP); MURAKAMI Youhei, Kyoto-shi, Kyoto 612-8501 (JP); SATO Masayuki, Kyoto-shi, Kyoto 612-8501 (JP)
(74) Representative: Viering, Jentschura & Partner mbB Patent- und Rechtsanwälte
(86) International application number: PCT/JP2022/011419
(87) International publication number: WO 2022/202453

(57) **Abstract**

An electronic device includes transmission antennas, reception antennas, and an electronic component. The transmission antennas each transmit a transmission wave. The reception antennas each receive a reflected wave that is the transmission wave having been reflected. The electronic component outputs respective transmission signals to the transmission antennas and receive respective reception signals from the reception antennas. The electronic component has a first edge where transmission terminals that output the respective transmission signals to the transmission antennas are arranged, and a second edge where reception terminals that receive the respective reception signals from the reception antennas are arranged. At least one of the first edge or the second edge is located obliquely relative to at least one of a direction in which respective feeding points of the transmission antennas are arranged or a direction in which respective feeding points of the reception antennas are arranged.

## Description

### CROSS-REFERENCE TO RELATED APPLICATIONS

This application claims priority from Japanese Patent Application No. 2021-54213 filed in Japan on March 26, 2021, the entire disclosure of which is incorporated herein by reference.

### TECHNICAL FIELD

The present disclosure relates to an electronic device.

### BACKGROUND OF INVENTION

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and receiving a reflected wave reflected off the object. Such a technology for measuring a distance or the like expectedly becomes more important in the future with progresses of a technology for assisting drivers in driving and an automated-driving-related technology for partially or entirely automating driving.

In a technology such as the radar described above, various proposals have been made for arrangement of antennas that transmit and receive signals. For example, Patent Literature 1 has proposed a millimeter-wave transmission/reception device in which multiple patch antennas are connected in parallel by transmission lines all having an equal length. Patent Literature 1 has also proposed a millimeter-wave transmission/reception device in which multiple sets of multiple patch antennas that are longitudinally arranged and are directly connected to each other by transmission lines each having an equal length are further arranged in a lateral direction. With such arrangements of the patch antennas, an effect of enhancing the directivity of transmission waves in a front direction can be expected.

Patent Literature 2 has proposed a radar device in which patch antennas are connected at an interval of nλ (where n denotes an integer of 2 or greater and λ denotes a wavelength of a center frequency to be used). With such an arrangement of the patch antennas, a tilt angle in a vertical direction is increased at a frequency shifted from the center frequency, and an effect of adjusting a radiation direction of a radar wave by utilizing the change in the tilt angle can be expected.

### CITATION LIST

### PATENT LITERATURE

Patent Literature 1: Japanese Unexamined Patent Application Publication No. 10-261917
Patent Literature 2: Japanese Unexamined Patent Application Publication No. 2010-220008

### SUMMARY

In one embodiment, an electronic device includes a plurality of transmission antennas, a plurality of reception antennas, and an electronic component. The plurality of transmission antennas is each configured to transmit a transmission wave. The plurality of reception antennas is each configured to receive a reflected wave that is the transmission wave having been reflected. The electronic component is configured to output respective transmission signals to the plurality of transmission antennas and receive respective reception signals from the plurality of reception antennas.

The electronic component has a first edge where a plurality of transmission terminals each configured to output a respective one of the transmission signals to a respective one of the plurality of transmission antennas is arranged, and a second edge where a plurality of reception terminals each configured to receive a respective one of the reception signals from a respective one of the plurality of reception antennas is arranged.

At least one of the first edge or the second edge is located obliquely relative to at least one of a direction in which respective feeding points of the plurality of transmission antennas are arranged or a direction in which respective feeding points of the plurality of reception antennas are arranged.

### BRIEF DESCRIPTION OF THE DRAWINGS

FIG. 1 is a diagram for describing how an electronic device according to one embodiment is used.
FIG. 2 is a functional block diagram schematically illustrating a configuration of the electronic device according to the one embodiment.
FIG. 3 is a diagram for describing a structure of a transmission signal according to the one embodiment.
FIG. 4 is a diagram illustrating a comparative example for describing an arrangement of transmission antennas, reception antennas, and an electronic component in the electronic device according to the one embodiment.
FIG. 5 is a diagram illustrating an example of an arrangement of the transmission antennas, the reception antennas, and the electronic component in the electronic device according to the one embodiment.
FIG. 6 is a diagram illustrating another example of the arrangement of the transmission antennas, the reception antennas, and the electronic component in the electronic device according to the one embodiment.
FIG. 7 is a diagram illustrating still another example of the arrangement of the transmission antennas, the reception antennas, and the electronic component in the electronic device according to the one embodiment.

### DESCRIPTION OF EMBODIMENTS

In an electronic device that detects a predetermined object by receiving a reflected wave of a transmission wave that has been transmitted and has been reflected off the object, a signal loss in transmission lines to antennas that transmit and receive signals for detecting the object is successfully reduced if the transmission lines are shortened. The present disclosure provides an electronic device that may allow shortened transmission lines to antennas that transmit and receive signals for detecting an object. One embodiment can provide an electronic device that may allow shortened transmission lines to antennas that transmit and receive signals for detecting an object. One embodiment is described in detail below with reference to the drawings.

An electronic device according to one embodiment is mounted in a vehicle (mobility device) such as an automobile, for example, and thus is capable of detecting a predetermined object located around the mobility device. To this end, the electronic device according to the one embodiment is capable of transmitting a transmission wave to an area around the mobility device from a transmission antenna installed on or in the mobility device. The electronic device according to the one embodiment is also capable of receiving a reflected wave that is the reflected transmission wave, from a reception antenna installed on or in the mobility device. For example, a radar sensor or the like installed on or in the mobility device may include at least one of the transmission antenna or the reception antenna.

Atypical configuration example is described below in which the electronic device according to the one embodiment is mounted in an automobile such as a passenger car. However, the mobility device in which the electronic device according to the one embodiment is mounted is not limited to an automobile. The electronic device according to the one embodiment may be mounted in various mobility devices such as a bus, a truck, a motorcycle, a bicycle, a ship, an aircraft, agricultural machinery such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between a sensor and a predetermined object when at least one of the sensor or the object is movable. The electronic device according to the one embodiment is also capable of measuring a distance or the like between the sensor and the object even when both the sensor and the object are stationary.

An example of how the electronic device according to the one embodiment detects an object is described.

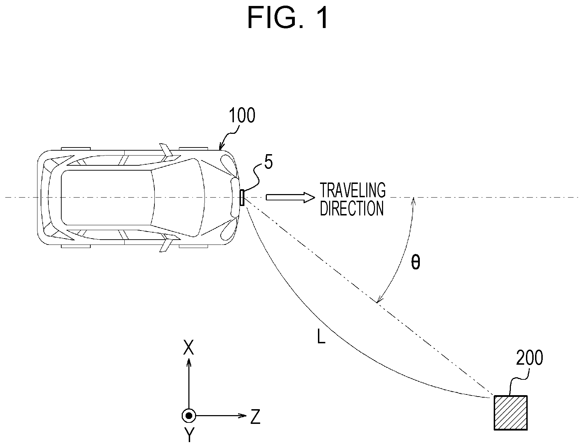

FIG. 1 is a diagram for describing how the electronic device according to the one embodiment is used. FIG. 1 illustrates an example in which a sensor, including a transmission antenna and a reception antenna, according to the one embodiment is installed on a mobility device.

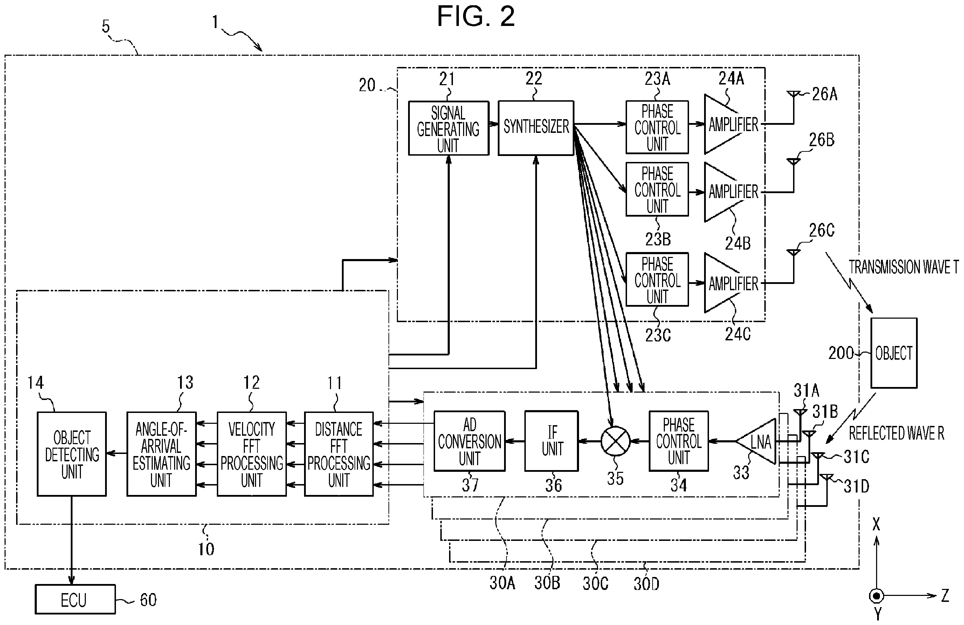

A sensor 5, including a transmission antenna and a reception antenna, according to the one embodiment is installed on a mobility device 100 illustrated in FIG. 1. The mobility device 100 illustrated in FIG. 1 includes an electronic device 1 according to the one embodiment mounted (for example, built) therein. A specific configuration of the electronic device 1 is described later. The sensor 5 may include at least one of the transmission antenna or the reception antenna, for example. The sensor 5 may appropriately include at least any of other functional units, such as at least part of a controller 10 (FIG. 2) included in the electronic device 1. The mobility device 100 illustrated in FIG. 1 may be an automotive vehicle such as a passenger car but may be a mobility device of any type. In FIG. 1, the mobility device 100 may move (travel or slowly travel), for example, in a positive Z-axis direction (traveling direction) illustrated in FIG. 1 or in another direction, or may be stationary without moving.

As illustrated in FIG. 1, the sensor 5 including the transmission antenna is installed on the mobility device 100. In the example illustrated in FIG. 1, only one sensor 5 including the transmission antenna and the reception antenna is installed at a front portion of the mobility device 100. The position where the sensor 5 is installed on the mobility device 100 is not limited to the position illustrated in FIG. 1 and may be another appropriate position. For example, the sensor 5 illustrated in FIG. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in FIG. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object.

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as the radar and the LIDAR are already known, detailed description may be appropriately simplified or omitted.

The electronic device 1 mounted in the mobility device 100 illustrated in FIG. 1 receives, from the reception antenna, the reflected wave of the transmission wave transmitted from the transmission antenna of the sensor 5. In this manner, the electronic device 1 can detect the predetermined object 200 located within a predetermined distance from the mobility device 100. For example, as illustrated in FIG. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling next to the mobility device 100, an automobile traveling in front of or behind the mobility device 100 in the same lane, or the like. The object 200 may also be any object located around the mobility device 100, such as a motorcycle, a bicycle, a stroller, a person such as a pedestrian, an animal, other forms of life such as an insect, a guardrail, a median strip, a road sign, a step on a sidewalk, a wall, or an obstacle. The object 200 may be in motion or stationary. For example, the object 200 may be an automobile or the like that is parked or stationary around the mobility device 100.

In FIG. 1, a ratio between a size of the sensor 5 and a size of the mobility device 100 does not necessarily indicate an actual ratio. FIG. 1 illustrates the sensor 5 that is installed at an outer portion of the mobility device 100. However, in one embodiment, the sensor 5 may be installed at various positions of the mobility device 100. For example, in one embodiment, the sensor 5 may be installed inside a bumper of the mobility device 100 so as not to be seen in the appearance of the mobility device 100.

Atypical example is described below in which the transmission antenna of the sensor 5 transmits a radio wave in a frequency band, such as a millimeter wave (equal to or higher than 30 GHz) or a quasi-millimeter wave (for example, around 20 GHz to 30 GHz). For example, the transmission antenna of the sensor 5 may transmit a radio wave having a frequency bandwidth of 4 GHz such as from 77 GHz to 81 GHz.

FIG. 2 is a functional block diagram schematically illustrating an example of a configuration of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency band of 79 GHz has a feature that a usable frequency bandwidth is wider than other millimeter-wave and/or quasi-millimeter-wave radars of frequency bands of 24 GHz, 60 GHz, and 76 GHz, for example. Such an embodiment is described below.

As illustrated in FIG. 2, the electronic device 1 according to the one embodiment includes the sensor 5 and an ECU (Electronic Control Unit) 50. The ECU 60 controls various operations of the mobility device 100. The ECU 60 may include at least one or more ECUs. In the present disclosure, the "electronic device" may mean, for example, the electronic device 1 illustrated in FIG. 2 (that is, including the sensor 5 and the ECU 60, for example) or may mean, for example, the sensor 5 illustrated in FIG. 2.

The electronic device 1 according to the one embodiment includes the controller 10. The electronic device 1 according to the one embodiment may also appropriately include another functional unit such as at least any of a transmission unit 20 or reception units 30A to 30D. As illustrated in FIG. 2, the electronic device 1 may include multiple reception units such as the reception units 30A to 30D. When the reception units 30A, 30B, 30C, and 30D are not particularly distinguished from one another, the reception units 30A, 30B, 30C, and 30D are simply referred to as "reception units 30" below.

The controller 10 may include a distance FFT processing unit 11, a velocity FFT processing unit 12, an angle-of-arrival estimating unit 13, and an object detecting unit 14. These functional units included in the controller 10 are further described later.

As illustrated in FIG. 2, the transmission unit 20 may include a signal generating unit 21, a synthesizer 22, phase control units 23A, 23B, and 23C, amplifiers 24A, 24B, and 24C, and transmission antennas 26A, 26B, and 26C. When the phase control units 23A, 23B, and 23C are not distinguished from one another, the phase control units 23A, 23B, and 23C are simply referred to as "phase control units 23" below. When the amplifiers 24A, 24B, and 24C are not distinguished from one another, the amplifiers 24A, 24B, and 24C are simply referred to as "amplifiers 24" below. When the transmission antennas 26A, 26B, and 26C are not distinguished from one another, the transmission antennas 26A, 26B, and 26C are simply referred to as "transmission antennas 26" below.

As illustrated in FIG. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in FIG. 2, each of the plurality of reception units 30 may include an LNA 33, a phase control unit 34, a mixer 35, an IF unit 36, and an AD conversion unit 37. The reception units 30A to 30D may have the same and/or similar configuration. FIG. 2 schematically illustrates the configuration of the reception unit 30A alone as a representative example.

The sensor 5 described above may include, for example, the transmission antennas 26 and the reception antennas 31. The sensor 5 may also appropriately include at least any of other functional units such as the controller 10.

The controller 10 included in the electronic device 1 according to the one embodiment is capable of controlling the individual functional units of the electronic device 1 and controlling operations of the entire electronic device 1. To provide control and processing capabilities for executing various functions, the controller 10 may include at least one processor, for example, a CPU (Central Processing Unit) or a DSP (Digital Signal Processor). The controller 10 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the one embodiment, the controller 10 may be configured as, for example, a CPU and a program executed by the CPU. The controller 10 may include a memory of any type as appropriate. In the one embodiment, the memory of any type may store various parameters for setting a range in which an object is detected based on a transmission wave T transmitted from each transmission antenna 26 and a reflected wave R received from each reception antenna 31.

In the electronic device 1 according to the one embodiment, the controller 10 is capable of controlling at least one of the transmission unit 20 or the reception units 30. In this case, the controller 10 may control at least one of the transmission unit 20 or the reception units 30, based on various kinds of information stored in the memory of any type, for example. In the electronic device 1 according to the one embodiment, the controller 10 may instruct the signal generating unit 21 to generate a signal or may control the signal generating unit 21 to generate a signal.

In accordance with control performed by the controller 10, the signal generating unit 21 generates a signal (transmission signal) to be transmitted as the transmission wave T from each of the transmission antennas 26. When generating a transmission signal, the signal generating unit 21 may allocate a frequency of the transmission signal in accordance with control performed by the controller 10, for example. Specifically, the signal generating unit 21 may allocate the frequency of the transmission signal in accordance with a parameter set by the controller 10. For example, the signal generating unit 21 receives frequency information from the controller 10 and generates a signal having a predetermined frequency in a frequency band such as from 77 GHz to 81 GHz, for example. The signal generating unit 21 may include a functional unit such as a voltage control oscillator (VCO), for example.

The signal generating unit 21 may be configured as hardware having the function, for example as a microcomputer, or for example as a processor such as a CPU and a program or the like executed by the processor. Each functional unit described below may also be configured as hardware having the function, for example as a microcomputer if possible, or for example as a processor such as a CPU and a program or the like executed by the processor if possible.

In the electronic device 1 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. For example, the controller 10 may set in advance the signal generated by the signal generating unit 21. For example, the memory of any type or the like may store in advance the signal generated by the signal generating unit 21. Since a chirp signal used in a technical field such as the radar is known, more detailed description is appropriately simplified or omitted. The signal generated by the signal generating unit 21 is supplied to the synthesizer 22.

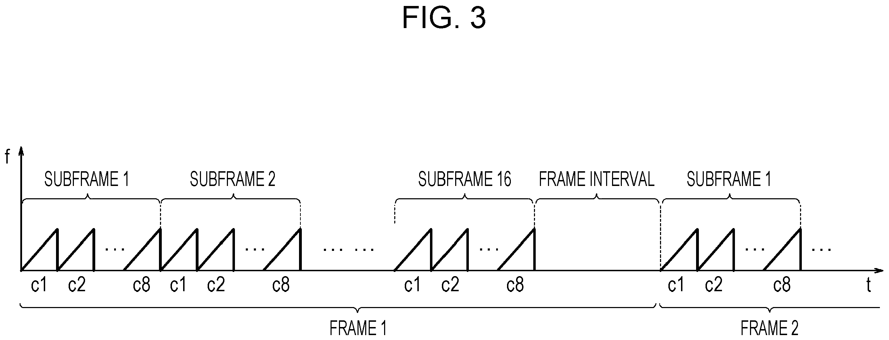

FIG. 3 is a diagram for describing an example of chirp signals generated by the signal generating unit 21.

In FIG. 3, the horizontal axis represents elapsed time, and the vertical axis represents a frequency. In the example illustrated in FIG. 3, the signal generating unit 21 generates linear chirp signals whose frequency changes linearly and periodically. FIG. 3 illustrates chirp signals c1, c2, ..., c8. As illustrated in FIG. 3, the frequency of each chirp signal linearly increases as time elapses.

In the example illustrated in FIG. 3, one subframe includes eight chirp signals c1, c2, ..., c8. That is, each of subframes such as a subframe 1 and a subframe 2 illustrated in FIG. 3 includes eight chirp signals c1, c2, ..., c8. In the example illustrated in FIG. 3, one frame includes 16 subframes such as the subframes 1 to 16. That is, each of frames such as a frame 1 and a frame 2 illustrated in FIG. 3 includes 16 subframes. As illustrated in FIG. 3, a frame interval of a predetermined length may be included between frames. Each single frame illustrated in FIG. 3 may have a length of about 30 ms to 50 ms, for example.

In FIG. 3, the frame 2 and subsequent frames may have the same and/or similar configuration. In FIG. 3, the frame 3 and subsequent frames may have the same and/or similar configuration. In the electronic device 1 according to the one embodiment, the signal generating unit 21 may generate a transmission signal as any number of frames. In FIG. 3, an illustration of some chirp signals is omitted. As described above, for example, the memory of any type or the like may store a relationship between time and a frequency of the transmission signal generated by the signal generating unit 21.

As described above, the electronic device 1 according to the one embodiment may transmit a transmission signal made up of subframes each including multiple chirp signals. The electronic device 1 according to the one embodiment may transmit a transmission signal made up of frames each including a predetermined number of subframes.

In the description below, the electronic device 1 transmits a transmission signal having the frame structure illustrated in FIG. 3. However, the frame structure illustrated in FIG. 3 is an example. For example, the number of chirp signals included in one subframe is not limited to eight. In one embodiment, the signal generating unit 21 may generate a subframe including any number of (for example, multiple) chirp signals. The subframe structure illustrated in FIG. 3 is also an example. For example, the number of subframes included in one frame is not limited to 16. In one embodiment, the signal generating unit 21 may generate a frame including any number of (for example, multiple) subframes. The signal generating unit 21 may generate signals having different frequencies. The signal generating unit 21 may generate multiple discrete signals of bandwidths in which frequencies f are different from each other.

Referring back to FIG. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 26. For example, the controller 10 may set the frequency selected as the frequency of the transmission wave T to be transmitted from each of the transmission antennas 26. For example, the frequency selected as the frequency of the transmission wave T to be transmitted from each of the transmission antennas 26 may be a frequency selected by the controller 10. For example, the memory of any type may store the frequency selected as the frequency of the transmission wave T to be transmitted from each of the transmission antennas 26. The signal whose frequency has been increased by the synthesizer 22 is supplied to the phase control unit 23 and the mixer 35. When the multiple phase control units 23 are present, the signal whose frequency has been increased by the synthesizer 22 may be supplied to each of the multiple phase control units 23. When the multiple reception units 30 are present, the signal whose frequency has been increased by the synthesizer 22 may be supplied to the mixer 35 of each of the multiple reception units 30.

Each of the phase control units 23 controls (adjusts) a phase of the transmission signal supplied from the synthesizer 22. Specifically, for example, in accordance with control performed by the controller 10, each of the phase control units 23 may appropriately advance or delay the phase of the signal supplied from the synthesizer 22 to adjust the phase of the transmission signal. In this case, based on a difference between paths of the transmission waves T to be transmitted from the multiple transmission antennas 26, the phase control units 23 may adjust the phases of the respective transmission signals. The phase control units 23 appropriately adjust the phases of the respective transmission signals, so that the transmission waves T transmitted from the multiple transmission antennas 26 enhance with one another in a predetermined direction to form a beam (beamforming). In this case, for example, the memory of any type may store a correlation between a direction of beamforming and amounts of phase by which the respective transmission signals to be transmitted by the multiple transmission antennas 26 are to be controlled. Each of the phase control units 23 may include, for example, a phase shifter of any type. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the controller 10, for example. When the sensor 5 includes the multiple transmission antennas 26, each of the multiple amplifiers 24 may amplify power (electric power) of the transmission signal supplied from a respective one of the multiple phase control units 23 in accordance with control performed by the controller 10, for example. Since the technology for amplifying power of a transmission signal is already known, more detailed description is omitted. The amplifier 24 is connected to the transmission antenna 26.

The transmission antenna 26 outputs (transmits), as the transmission wave T, the transmission signal amplified by the amplifier 24. When the sensor 5 includes the multiple transmission antennas 26, each of the multiple transmission antennas 26 may output (transmit), as the transmission wave T, the transmission signal amplified by a respective one of the multiple amplifiers 24. Since the transmission antennas 26 can have a configuration that is the same as and/or similar to the configuration of transmission antennas for use in the known radar technology, more detailed description is omitted.

Accordingly, the electronic device 1 according to the one embodiment, which includes the transmission antennas 26, can transmit transmission signals (for example, transmission chirp signals) as the transmission waves T from the respective transmission antennas 26. At least one of the functional units of the electronic device 1 may be housed in one housing. In this case, the one housing may have a hard-to-open structure. For example, the transmission antennas 26, the reception antennas 31, and the amplifiers 24 are desirably housed in one housing, and this housing desirably has a hard-to-open structure. When the sensor 5 is installed on the mobility device 100 such as an automobile, each of the transmission antennas 26 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the transmission antennas 26 with a member such as the radar cover can reduce a risk of the transmission antennas 26 being damaged or malfunctioning because of a contact with an external object. The radar cover and the housing may also be referred to as a radome.

FIG. 2 illustrates an example of the electronic device 1 that includes three transmission antennas 26. However, in one embodiment, the electronic device 1 may include any number of transmission antennas 26. On the other hand, in one embodiment, the electronic device 1 may include the multiple transmission antennas 26 when the transmission waves T transmitted from the respective transmission antennas 26 form a beam in a predetermined direction. In the one embodiment, the electronic device 1 may include the multiple phase control units 23 and the multiple amplifiers 24 to correspond to the multiple transmission antennas 26. Each of the multiple phase control units 23 may control the phase of a respective one of the multiple transmission waves supplied from the synthesizer 22 and to be transmitted from the respective transmission antennas 26. Each of the multiple amplifiers 24 may amplify power of a respective one of the multiple transmission signals to be transmitted from the respective transmission antennas 26. In this case, the sensor 5 may include the multiple transmission antennas. As described above, when the electronic device 1 illustrated FIG. 2 includes the multiple transmission antennas 26, the electronic device 1 may include multiple functional units necessary for transmitting the transmission waves T from the multiple transmission antennas 26.

The reception antenna 31 receives the reflected wave R. The reflected wave R is the transmission wave T reflected off the predetermined object 200. As the reception antenna 31, multiple antennas such as the reception antennas 31A to 31D, for example, may be included. Since the reception antennas 31 can have a configuration that is the same as and/or similar to the configuration of reception antennas for use in the known radar technology, more detailed description is omitted. The reception antenna 31 is connected to the LNA 33. A reception signal based on the reflected wave R received by the reception antenna 31 is supplied to the LNA 33.

The electronic device 1 according to the one embodiment can receive, from each of the multiple reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the reception antennas 31 with a member such as the radar cover can reduce a risk of the reception antennas 31 being damaged or malfunctioning because of a contact with an external object. The radar cover and the housing may also be referred to as a radome.

When the reception antenna 31 is installed near the transmission antenna 26, these reception antenna 31 and transmission antenna 26 may be collectively included in one sensor 5. That is, for example, the one sensor 5 may include at least one transmission antenna 26 and at least one reception antenna 31. For example, the one sensor 5 may include the multiple transmission antennas 26 and the multiple reception antennas 31. In such a case, one radar sensor may be covered with a cover member such as one radar cover, for example.

The LNA 33 amplifies, with low noise, the reception signal based on the reflected wave R received by the reception antenna 31. The LNA 33 may be a low-noise amplifier and amplifies, with low noise, the reception signal supplied from the reception antenna 31. The reception signal amplified by the LNA 33 is supplied to the phase control unit 34.

The phase control unit 34 controls (adjusts) a phase of the reception signal supplied from the LNA 33. Specifically, for example, in accordance with control performed by the controller 10, the phase control unit 34 may appropriately advance or delay the phase of the signal supplied from the LNA 33 to adjust the phase of the reception signal. In this case, based on a difference between paths of the reflected waves R received from the multiple reception antennas 31, the phase control units 34 may adjust the phases of the respective reception signals. In this case, for example, the memory of any type may store amounts of phase by which the respective reception signals received from the multiple reception antennas 31 are to be controlled. The phase control unit 34 may include, for example, a phase shifter of any type. The transmission signal whose phase is controlled by the phase control unit 34 is supplied to the mixer 35.

The mixer 35 mixes (multiplies) the reception signal having a radio frequency (RF) and supplied from the phase control unit 34 and the transmission signal supplied from the synthesizer 22 to generate a beat signal. The beat signal obtained by the mixer 35 through mixing is supplied to the IF unit 36.

The IF unit 36 performs frequency conversion on the beat signal supplied from the mixer 35 to decrease the frequency of the beat signal to an intermediate frequency (IF). The beat signal whose frequency has been decreased by the IF unit 36 is supplied to the AD conversion unit 37.

The AD conversion unit 37 digitizes the analog beat signal supplied from the IF unit 36. The AD conversion unit 37 may be configured as an analog-to-digital conversion circuit (Analog-to-Digital Converter (ADC)) of any type. The digitized beat signal obtained by the AD conversion unit 37 is supplied to the distance FFT processing unit 11 of the controller 10. When the multiple reception units 30 are present, the digitized beat signals obtained by the respective AD conversion units 37 may be supplied to the distance FFT processing unit 11.

The distance FFT processing unit 11 estimates a distance between the mobility device 100 equipped with the electronic device 1 and the object 200, based on the beat signals supplied from the respective AD conversion units 37. The distance FFT processing unit 11 may include a processing unit that performs fast Fourier transform, for example. In this case, the distance FFT processing unit 11 may be configured as a circuit, chip, or the like of any type that performs fast Fourier transform (FFT).

The distance FFT processing unit 11 performs FFT processing (hereinafter, appropriately referred to as "distance FFT processing") on the digitized beat signals obtained by the AD conversion units 37. For example, the distance FFT processing unit 11 may perform FFT processing on complex signals supplied from the AD conversion units 37. The digitized beat signals obtained by the AD conversion units 37 can be represented as temporal changes in signal intensity (power). The distance FFT processing unit 11 performs FFT processing on such beat signals, so that the beat signals can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, a method for determining that an object (reflecting object) that reflects a transmission wave is located when a peak value that is equal to or greater than a threshold is detected from the average power or amplitude of a disturbance signal, such as a constant false alarm rate (CFAR) detection process, is known.

As described above, the electronic device 1 according to the one embodiment can detect the object 200 that reflects the transmission wave T, based on the transmission signal transmitted as the transmission wave T and the reception signal received as the reflected wave R.

The distance FFT processing unit 11 can estimate a distance to a predetermined object, based on one chirp signal (for example, c1 illustrated in FIG. 3). That is, the electronic device 1 can measure (estimate) the distance L illustrated in FIG. 1 by performing the distance FFT processing. Since a technique for measuring (estimating) a distance to a predetermined object by performing FFT processing on a beat signal is known, more detailed description is appropriately simplified or omitted. Results (for example, distance information) of the distance FFT processing performed by the distance FFT processing unit 11 may be supplied to the velocity FFT processing unit 12. The results of the distance FFT processing performed by the distance FFT processing unit 11 may also be supplied to the object detecting unit 14.

The velocity FFT processing unit 12 estimates a relative velocity between the mobility device 100 equipped with the electronic device 1 and the object 200, based on the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured as a circuit, chip, or the like of any type that performs fast Fourier transform (FFT).

The velocity FFT processing unit 12 further performs FFT processing (hereinafter, appropriately referred to as "velocity FFT processing") on the beat signals on which the distance FFT processing unit 11 has performed the distance FFT processing. For example, the velocity FFT processing unit 12 may perform FFT processing on the complex signals supplied from the distance FFT processing unit 11. The velocity FFT processing unit 12 can estimate a relative velocity to the predetermined object, based on a subframe (for example, the subframe 1 illustrated in FIG. 3) including chirp signals. When the distance FFT processing is performed on the beat signals in the above-described manner, multiple vectors can be generated. The velocity FFT processing unit 12 can estimate a relative velocity to the predetermined object by determining a phase of a peak in a result of the velocity FFT processing performed on these multiple vectors. That is, the electronic device 1 can measure (estimate) a relative velocity between the mobility device 100 and the predetermined object 200 illustrated in FIG. 1 by performing the velocity FFT processing. Since a technique for measuring (estimating) a relative velocity to a predetermined object by performing velocity FFT processing on a result of distance FFT processing is known, more detailed description is appropriately simplified or omitted. Results (for example, velocity information) of the velocity FFT processing performed by the velocity FFT processing unit 12 may be supplied to the angle-of-arrival estimating unit 13. The results of the velocity FFT processing performed by the velocity FFT processing unit 12 may also be supplied to the object detecting unit 14.

The angle-of-arrival estimating unit 13 estimates a direction from which the reflected wave R arrives from the predetermined object 200, based on the result of the velocity FFT processing performed by the velocity FFT processing unit 12. The electronic device 1 can estimate the direction from which the reflected wave R arrives by receiving the reflected wave R from the multiple reception antennas 31. For example, the multiple reception antennas 31 are arranged at a predetermined interval. In this case, the transmission wave T transmitted from the transmission antenna 26 is reflected off the predetermined object 200 to become the reflected wave R. Each of the multiple reception antennas 31 arranged at the predetermined interval receives the reflected wave R. The angle-of-arrival estimating unit 13 can estimate the direction from which the reflected wave R arrives at each of the multiple reception antennas 31, based on the phase of the reflected wave R received by the reception antenna 31 and a difference in path of the reflected wave R. That is, the electronic device 1 can measure (estimate) the angle of arrival θ illustrated in FIG. 1, based on the result of the velocity FFT processing.

Various techniques for estimating a direction from which the reflected wave R arrives, based on a result of velocity FFT processing have been proposed. For example, known direction-of-arrival estimation algorithms include MUSIC (MUltiple Signal Classification), ESPRIT (Estimation of Signal Parameters via Rotational Invariance Technique), and the like. Thus, more detailed description of the known techniques is appropriately simplified or omitted. Information (angle information) of the angle of arrival θ estimated by the angle-of-arrival estimating unit 13 may be supplied to the object detecting unit 14.

The object detecting unit 14 detects an object located in a range in which the transmission waves T are transmitted, based on the information supplied from at least any of the distance FFT processing unit 11, the velocity FFT processing unit 12, or the angle-of-arrival estimating unit 13. The object detecting unit 14 may perform detection of an object by performing, for example, clustering processing based on the supplied distance information, velocity information, and angle information. For example, a known algorithm used in clustering of data includes DBSCAN (Density-based spatial clustering of applications with noise) or the like. In the clustering processing, for example, average power of points constituting the detected object may be calculated. The distance information, the velocity information, the angle information, and the power information of the object detected by the object detecting unit 14 may be supplied to the ECU 60. In this case, when the mobility device 100 is an automobile, communication may be performed using a communication interface such as a CAN (Controller Area Network), for example.

The controller 10 sets various parameters that define a transmission signal and a reception signal with which an object that reflects the transmission wave T as the reflected wave R is to be detected. That is, the controller 10 may set various parameters for transmitting the transmission wave T from the transmission antenna 26 and various parameters for receiving the reflected wave R from the reception antenna 31.

In particular, in the one embodiment, the controller 10 may set various parameters related to transmission of the transmission wave T and reception of the reflected wave R in order to detect an object. For example, the controller 10 may define a range or the like in which the reflected wave R is desirably received in order to detect the object located in an object detection range by receiving the reflected wave R. For example, the controller 10 may define a range or the like to which a beam of the transmission waves T is desirably directed in order to detect an object located in the object detection range by transmitting the transmission waves T from the multiple transmission antennas 26. The controller 10 may also set various parameters for transmitting the transmission wave T and receiving the reflected wave R.

The various parameters set by the controller 10 may be supplied to the signal generating unit 21. Thus, the signal generating unit 21 can generate the transmission signal to be transmitted as the transmission waves T, based on the various parameters set by the controller 10. The various parameters set by the controller 10 may be supplied to the object detecting unit 14. Thus, the object detecting unit 14 can perform object detection processing in the object detection range determined based on the various parameters set by the controller 10.

The ECU 60 included in the electronic device 1 according to the one embodiment is capable of controlling functional units of the mobility device 100 and controlling operations of the entire mobility device 100. To provide control and processing capabilities for executing various functions, the ECU 60 may include at least one processor, for example, a CPU (Central Processing Unit) or a DSP (Digital Signal Processor). The ECU 60 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In one embodiment, the ECU 60 may be configured as, for example, a CPU and a program executed by the CPU. The ECU 60 may appropriately include a memory necessary for operations of the ECU 60. At least part of the functions of the controller 10 may be functions of the ECU 60, or at least part of the functions of the ECU 60 may be functions of the controller 10.

The electronic device 1 illustrated in FIG. 2 includes the three transmission antennas 26 and the four reception antennas 31. However, the electronic device 1 according to the one embodiment may include any number of (multiple) transmission antennas 26 and any number of (multiple) reception antennas 31. As described above, the electronic device 1 according to the one embodiment may include the multiple transmission antennas 26 that transmit respective transmission waves, and the multiple reception antennas 31 that receive respective reflected waves that are the reflected transmission waves. For example, when the electronic device 1 includes the two transmission antennas 26 and the four reception antennas 31, the electronic device 1 can be regarded to include a virtual antenna array virtually including eight antennas. As described above, the electronic device 1 may receive the reflected wave R of 16 subframes illustrated in FIG. 3 by using, for example, the eight virtual antennas.

The configuration of the sensor 5 included in the electronic device 1 according to the one embodiment is further described. Prior to description of a specific configuration of the sensor 5 included in the electronic device 1 according to the one embodiment, a sensor generally assumed as a device such as a known radar sensor is described.

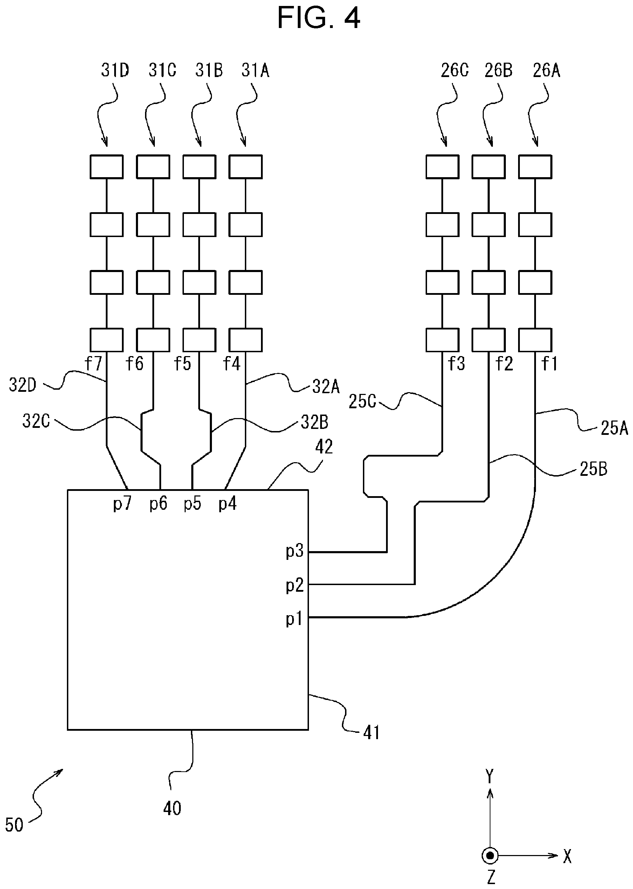

FIG. 4 is a diagram illustrating a comparative example for describing an arrangement of the transmission antennas, the reception antennas, and an electronic component in the electronic device 1 according to the one embodiment. That is, FIG. 4 is a diagram illustrating a configuration of a sensor assumed as a target to be compared with the sensor 5 included in the electronic device 1 according to the one embodiment.

A sensor 50 illustrated in FIG. 4 includes the multiple transmission antennas 26, the multiple reception antennas 31, and an electronic component 40. The multiple transmission antennas 26, the multiple reception antennas 31, and the electronic component 40 may be arranged on a planar substrate parallel to an XY plane, for example.

As illustrated in FIG. 4, the sensor 50 may include the transmission antennas 26A, 26B, and 26C, for example. When the transmission antennas 26A, 26B, and 26C are not distinguished from one another, the transmission antennas 26A, 26B, and 26C are simply referred to as "transmission antennas 26" below. The multiple transmission antennas 26 illustrated in FIG. 4 may correspond to the multiple transmission antennas 26 described in FIG. 2, for example.

As illustrated in FIG. 4, the sensor 50 may include, for example, the reception antennas 31A, 31B, 31C, and 31D. When the reception antennas 31A, 31B, 31C, and 31D are not distinguished from one another, the reception antennas 31A, 31B, 31C, and 31D are simply referred to as "reception antennas 31" below. The multiple reception antennas 31 illustrated in FIG. 4 may correspond to the multiple reception antennas 31 described with reference to FIG. 2, for example.

The multiple transmission antennas 26 and the multiple reception antennas 31 illustrated in FIG. 4 each are depicted as four patch antennas (microstrip antennas) connected in series in a longitudinal direction (a Y-axis direction illustrated in FIG. 4). However, the multiple transmission antennas 26 and the multiple reception antennas 31 each may be any number of patch antennas or antennas of another form. The patch antennas of each of the multiple transmission antennas 26 and the multiple reception antennas 31 illustrated in FIG. 4 are disposed with positions thereof being aligned in the longitudinal direction (the Y-axis direction illustrated in FIG. 4). However, the patch antennas of each of the multiple transmission antennas 26 and the multiple reception antennas 31 may be arranged with positions thereof being shifted in the longitudinal direction (the Y-axis direction illustrated in FIG. 4). The patch antennas of each of the multiple transmission antennas 26 and the multiple reception antennas 31 illustrated in FIG. 4 are depicted as quadrangular (rectangular) microstrip antennas but may have another shape such as circular microstrip antennas, for example.

The electronic component 40 illustrated in FIG. 4 may be, for example, a component including at least part of the functions of at least any of the transmission unit 20, the reception units 30, and the controller 10 illustrated in FIG. 2. The electronic component 40 illustrated in FIG. 4 may be a component including all the functions of the transmission unit 20, the reception units 30, and the controller 10 illustrated in FIG. 2.

The electronic component 40 illustrated in FIG. 4 may output respective transmission signals to the multiple transmission antennas 26 and receive respective reception signals from the multiple reception antennas 31. The electronic component 40 may be, for example, a packaged semiconductor integrated circuit such as a chip or a die. In one embodiment, the electronic component 40 may be, for example, a SoC (System-on-a-chip). That is, the electronic component 40 may be an integrated circuit product in which functions for application purposes as well as functions of a general microcontroller including a processor core are integrated in a single chip of an integrated circuit and are designed to operate in cooperation to function as a system.

As illustrated in FIG. 4, the electronic component 40 may have, for example, a quadrangular shape. For example, as illustrated in FIG. 4, the electronic component 40 may at least have a first edge 41 and a second edge 42. In the electronic component 40 illustrated in FIG. 4, for example, the first edge 41 may be an edge in a substantially vertical direction, that is, an edge substantially parallel to the Y-axis direction illustrated in FIG. 4. In the electronic component 40 illustrated in FIG. 4, for example, the second edge 42 may be an edge in a substantially horizontal direction, that is, an edge substantially parallel to the X-axis direction illustrated in FIG. 4.

The first edge 41 of the electronic component 40 illustrated in FIG. 4 may be an edge where multiple transmission terminals (for example, p1 to p3) that output respective transmission signals to the multiple transmission antennas 26 are arranged. The multiple transmission terminals p1 to p3 illustrated in FIG. 4 may be, for example, output ports. As illustrated in FIG. 4, feeding points (f1 to f3) of the multiple transmission antennas 26A to 26C and the multiple transmission terminals (p1 to p3) at the first edge 41 of the electronic component 40 may be connected by transmission lines (25A to 25C), respectively.

The second edge 42 of the electronic component 40 illustrated in FIG. 4 may be an edge where multiple reception terminals (for example, p4 to p7) that receive respective reception signals from the multiple reception antennas 31 are arranged. The multiple reception terminals p4 and p7 illustrated in FIG. 4 may be, for example, input ports. As illustrated in FIG. 4, feeding points (f4 to f7) of the multiple reception antennas 31A to 31D and the multiple reception terminals (p4 to p7) at the second edge 42 of the electronic component 40 may be connected by transmission lines (32A to 32D), respectively.

The sensor 50 illustrated in FIG. 4 may control phases of RF signals to be output to the respective feeding points (f1 to f3) of the multiple transmission antennas 26. Thus, the sensor 50 illustrated in FIG. 4 can control the directivity of the multiple transmission antennas 26. As illustrated in FIG. 4, the transmission lines (25A to 25C) from the multiple transmission terminals (p1 to p3) of the electronic component 40 to the feeding points (f1 to f3) of the multiple transmission antennas 26 may be wires having an equal length, respectively. Thus, the sensor 50 can make a phase difference of the transmission signals at the multiple transmission antennas 26 zero.

As described above, in the sensor 50, the transmission lines (25A to 25C) of the respective transmission signals may have the equal length. Thus, when that initial values of the phases of the signals transmitted from the multiple transmission terminals (p1 to p3) in the electronic components 40 are equal to 0 deg. and power is fed to the multiple transmission antennas 26 with a phase difference of zero, the directivity of combined power can be set to 0 deg. through software processing.

The sensor 50 illustrated in FIG. 4 may detect phase differences between RF signals input from the multiple reception antennas 31 to the multiple reception terminals (p4 to p7) of the electronic component 40. Thus, the sensor 50 illustrated in FIG. 4 can estimate the direction of arrival of the reflected wave that is the transmission wave reflected off an object (for example, the ESPRIT method). As illustrated in FIG. 4, the transmission lines (32A to 32D) from the feeding points (f4 to f7) of the multiple reception antennas 31 to the multiple reception terminals (p4 to p7) of the electronic component 40 may be wires having an equal length, respectively. Thus, the sensor 50 can make a phase difference of the reception signals at the multiple reception antennas 31 zero.

As described above, in the sensor 50, the transmission lines (32A to 32D) of the respective reception signals may have the equal length. Thus, when the direction of arrival of the reflected wave is estimated using the phase difference of the signals received from the multiple reception antennas 31, the phase difference of the signals at the direction of arrival of 0 deg. can be set to 0 deg. through software processing.

As described above, setting the transmission lines (25A to 25C) of the respective transmission signals and/or the transmission lines (32A to 32D) of the respective reception signals to have equal lengths can make the initial value of the phase difference of the signals 0 deg.

On the other hand, as illustrated in FIG. 4, when the transmission lines (25A to 25C) of the respective transmission signals and/or the transmission lines (32A to 32D) of the respective reception signals have equal lengths, at least some of the transmission lines are to be wired to detour. For example, the transmission line 25C illustrated in FIG. 4 is wired to detour on a substrate as compared with the transmission lines 25A and 25B. The transmission lines 32B and 32C illustrated in FIG. 4 are wired to detour on the substrate as compared with the transmission lines 32A and 32D. The transmission lines wired to detour on the substrate in this manner are longer than the transmission lines connected with shortest paths. As the transmission line becomes longer, a loss of the signal passing through the transmission line may increase. When the transmission line detours on the substrate, a mounting area of the transmission line increases on the substrate. This may make it difficult to reduce the size of the device.

Accordingly, in the sensor 5 according to the one embodiment, the transmission lines of the respective transmission signals and/or the transmission lines of the respective reception signals are made as short as possible. Such an embodiment is further described below.

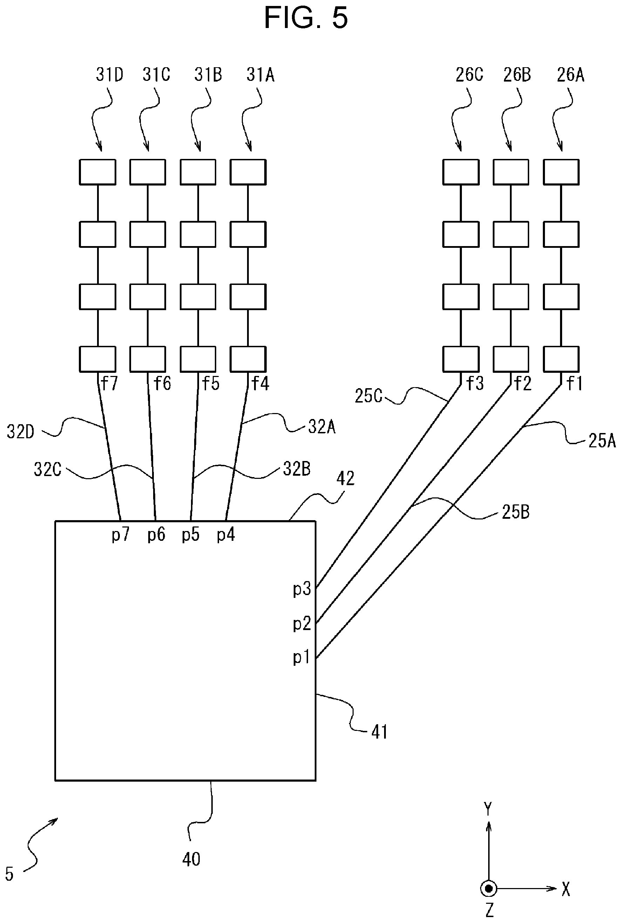

FIG. 5 is a diagram illustrating a configuration example of the sensor 5 according to the one embodiment. Specifically, FIG. 5 is a diagram illustrating an example of the arrangement of the multiple transmission antennas 26, the multiple reception antennas 31, and the electronic component 40 in the electronic device (the sensor 5) according to the one embodiment.

As illustrated in FIG. 5, in the sensor 5 according to the one embodiment, the transmission lines (25A to 25C) of the respective transmission signals and the transmission lines (32A to 32D) of the respective reception signals have shapes different from those of the sensor 50 illustrated in FIG. 4. Specifically, in the sensor 5 illustrated in FIG. 5, the transmission lines (25A to 25C) of the respective transmission signals and the transmission lines (32A to 32D) of the respective reception signals are linearly wired. Thus, in the sensor 5 illustrated in FIG. 5, the transmission lines (25A to 25C) of the respective transmission signals and the transmission lines (32A to 32D) of the respective reception signals can have lengths of shortest paths or lengths close to the shortest paths. In the sensor 5 according to the one embodiment, the electronic component 40 implements a function different from that of the electronic component 40 of the sensor 50 illustrated in FIG. 4.

Other than the foregoing, the sensor 5 according to the one embodiment can be configured in the same manner as the sensor 50 illustrated in FIG. 4. Thus, the same or similar description as that of the sensor 50 illustrated in FIG. 4 will be appropriately simplified or omitted.

As described above, in the electronic device (the sensor 5) according to the one embodiment, the feeding points (f1 to f3) of the multiple transmission antennas 26 may be connected to the multiple transmission terminals (p1 to p3) by the transmission lines (25A to 25C), respectively. In the electronic device (the sensor 5) according to the one embodiment, the feeding points (f4 to f7) of the multiple reception antennas 31 may be connected to the multiple reception terminals (p4 to p7) by the transmission lines (32A to 32D), respectively.

In the electronic device (the sensor 5) according to the one embodiment, the feeding points (f1 to f3) of the multiple transmission antennas 26 may be connected to the multiple transmission terminals (p1 to p3) by the transmission lines (25A to 25C) with the shortest paths, respectively. Likewise, in the electronic device (the sensor 5) according to the one embodiment, the feeding points (f4 to f7) of the multiple reception antennas 31 may be connected to the multiple reception terminals (p4 to p7) by the transmission lines (32A to 32D) with the shortest paths, respectively.

As in the electronic component 40 of the sensor 50 illustrated in FIG. 4, the electronic component 40 of the sensor 5 illustrated in FIG. 5 outputs respective transmission signals to the multiple transmission antennas 26 and receives respective reception signals from the multiple reception antennas 31. On the other hand, in the sensor 5 illustrated in FIG. 5, the electronic component 40 has the function of at least one of the phase control units 23 of the transmission unit 20 or the phase control units 34 of the respective reception units 30 illustrated in FIG. 2. The electronic component 40 of the sensor 5 illustrated in FIG. 5 may include a function other than the function of at least one of the phase control units 23 of the transmission unit 20 or the phase control units 34 of the respective reception units 30 illustrated in FIG. 2 as appropriate.

The electronic component 40 illustrated in FIG. 5 controls (adjusts) the phases of the respective transmission signals to be output from the multiple transmission terminals (p1 to p3) to the multiple transmission antennas 26 with the function of the phase control units 23 of the transmission unit 20. The phase control units 23 of the transmission unit 20 may adjust the phases of the respective transmission signals in accordance with the respective lengths of the multiple transmission lines (25A to 25C) of the transmission signals. In general, a signal delays more in a longer transmission line among multiple transmission lines of transmission signals. Thus, the phase control units 23 of the transmission unit 20 may adjust the phases of the respective transmission signals in advance such that the phase of the signal is advanced more for the longer transmission line among the multiple transmission lines of the transmission signals, for example. For example, the phase control units 23 of the transmission unit 20 may adjust the phases of the respective transmission signals such that the transmission signals are in phase at the feeding points (f1 to f3) of the multiple transmission antennas 26.

As described above, the electronic component 40 may adjust the phases of the respective transmission signals to be output from the multiple transmission terminals (p1 to p3). In this case, the electronic component 40 may adjust the phases of the respective transmission signals to be output from the multiple transmission terminals (p1 to p3), in accordance with the lengths of the transmission lines (f1 to f3) from the multiple transmission terminals (25A to 25C) to the feeding points (p1 to p3) of the multiple transmission antennas 26, respectively. In particular, the electronic component 40 may adjust the phases of the respective transmission signals such that the transmission signals to be output from the multiple transmission terminals (p1 to p3) are in phase at the feeding points (f1 to f3) of the multiple transmission antennas 26, respectively.

The electronic component 40 illustrated in FIG. 5 controls (adjusts) the phases of the respective reception signals input from the multiple reception antennas 31 to the multiple reception terminals (p4 to p7) with the function of the phase control units 34 of the respective reception units 30. The phase control units 34 of the respective reception units 30 may adjust the phases of the respective reception signals in accordance with the respective lengths of the multiple transmission lines (32A to 32D) of the reception signals. In general, a signal delays more in a longer transmission line among multiple transmission lines of reception signals. Thus, the phase control units 34 of the respective reception units 30 may adjust the phases of the respective reception signals such that the phase of the signal is advanced more for the longer transmission line among the multiple transmission lines of the reception signals, for example. For example, the phase control units 34 of the respective reception units 30 may adjust the phases of the respective reception signals such that the reception signals are in phase at the multiple reception terminals (p4 to p7) of the electronic component 40.

As described above, the electronic component 40 may adjust the phases of the respective reception signals input to the multiple reception terminals (p4 to p7). In this case, the electronic component 40 may adjust the phases of the respective reception signals input to the multiple reception terminals (p4 to p7), in accordance with the lengths of the transmission lines (32A to 32D) from the feeding points (f4 to f7) of the multiple reception antennas 31 to the multiple reception terminals (p4 to p7), respectively. In particular, the electronic component 40 may adjust the phases of the respective reception signals such that the reception signals input to the multiple reception terminals (p4 to p7) are in phase.

As illustrated in FIG. 5, the transmission lines (25A to 25C) from the multiple transmission terminals (p1 to p3) to the feeding points (f1 to f3) of the multiple transmission antennas 26 have different lengths. Thus, when the phase difference of the transmission signals output from the multiple transmission terminals (p1 to p3) is 0 deg., a phase difference occurs in the transmission signals at the feeding points (f1 to f3) of the multiple transmission antennas 26. For example, in the example illustrated in FIG. 5, δ1 denotes an amount of phase shift in the transmission line 25A, δ2 denotes an amount of phase shift in the transmission line 25B, and δ3 denotes an amount of phase shift in the transmission line 25C. In this case, a relationship of δ1 > δ2 > δ3 holds.

Likewise, a phase difference also occurs in the reception signals at the feeding points (f4 to f7) of the multiple reception antennas 31. For example, in the example illustrated in FIG. 5, δ4 denotes an amount of phase shift in the transmission line 32A, δ5 denotes an amount of phase shift in the transmission line 32B, δ6 denotes an amount of phase shift in the transmission line 32C, and δ7 denotes an amount of phase shift in the transmission line 32D. In this case, a relationship of 64 = δ7 > δ5 = δ6 holds. In the example illustrated in FIG. 5, the transmission lines 32A and 32D have an equal length, and the transmission lines 32B and 32C have an equal length.

Based on the relationships described above, the phase control units 23 and/or the phase control units 34 may offset the phases of the signals at the multiple transmission terminals (p1 to p3) and/or the multiple reception terminals (p4 to p7). Thus, the phase control units 23 of the electronic component 40 can equalize the phase differences of the signals between the multiple transmission terminals (p1 to p3) in the electronic component 40 and the feeding points (f1 to f3) of the multiple transmission antennas 26. The phase control units 34 of the electronic component 40 can equalize the phase differences of the signals between the feeding points (f4 to f37) of the multiple reception antennas 31 and the multiple reception terminals (p4 to p7) of the electronic component 40.

Suppose that an amount of phase shift at the transmission terminal p1 is 0 deg., an amount of phase shift at the transmission terminal p2 is δ2 deg., and an amount of phase shift at the transmission terminal p3 is δ3 deg. (where δ3 > δ2). Suppose that amounts of phase shift at the reception terminals p4 and p7 are 0 deg. and amounts of phase shifts at the reception terminals p5 and p6 are δ5 deg. By setting the amounts of phase shift above as initial values and varying the phase differences between the signals at the multiple transmission antennas 26, the sensor 5 according to the one embodiment can obtain the desired directivity of the transmission waves. Likewise, the sensor 5 according to the one embodiment can estimate the direction of arrival of the reflected waves with the multiple reception antennas 31.

As described above, the electronic device (the sensor 5) according to the one embodiment includes the multiple transmission antennas 26, the multiple reception antennas 31, and the electronic component 40. The multiple transmission antennas 26 each transmit a transmission wave. The multiple reception antennas 31 each receive a reflected wave that is the transmission wave having been reflected. The electronic component 40 outputs respective transmission signals to the multiple transmission antennas 25 and receive respective reception signals from the multiple reception antennas 31. In this manner, the electronic device (the sensor 5) according to the one embodiment can detect an object similarly to an ordinary radar sensor or the like. That is, the electronic device (the sensor 5) according to the one embodiment may detect an object that reflects the transmission wave, based on the transmission signals each transmitted as the transmission wave and the reception signals each received as the reflected wave.

As illustrated in FIG. 5, in the one embodiment, the electronic component 40 may have the first edge 41 and the second edge 42. The first edge 41 may be an edge where multiple transmission terminals (for example, p1 to p3) that output the respective transmission signals to the multiple transmission antennas 26 are arranged. The second edge 42 may be an edge where multiple reception terminals (for example, p4 to p7) that receive the respective reception signals from the multiple reception antennas 31 are arranged.

As illustrated in FIG. 5, in one embodiment, the respective feeding points (f1 to f3) of the multiple transmission antennas 26 and the respective feeding points (f4 to f7) of the multiple reception antennas 31 may be arranged on a same straight line or may be arranged in parallel to each other. As described above, in one embodiment, a direction in which the respective feeding points (f1 to f3) of the multiple transmission antennas 26 are arranged and a direction in which the respective feeding points (f4 to f7) of the multiple reception antennas 31 are arranged may be parallel to each other.

As illustrated in FIG. 5, in one embodiment, the electronic component 40 may have a quadrangular shape, for example. As illustrated in FIG. 5, the electronic component 40 may at least have the first edge 41 and the second edge 42, for example. In the electronic component 40 illustrated in FIG. 5, for example, the first edge 41 may be an edge in a substantially vertical direction, that is, an edge substantially parallel to the Y-axis direction illustrated in FIG. 5. In the electronic component 40 illustrated in FIG. 5, for example, the second edge 42 may be an edge in a substantially horizontal direction, that is, an edge substantially parallel to the X-axis direction illustrated in FIG. 5. As described above, in the one embodiment, the first edge 41 and the second edge 42 of the electronic component 40 may be arranged to be not in parallel to each other.

As described above, in the sensor 5 according to the one embodiment, multiple transmission lines that connect the electronic component 40 to the transmission antennas 26 and/or the reception antennas 31 may have different lengths. In such a configuration, the sensor 5 according to the one embodiment may offset the phases of the signals at the transmission terminals (p1 to p3) and/or the reception terminals (p4 to p7) to individual initial values. In the sensor 5 according to the one embodiment, the lengths of the transmission lines (25A to 25C and/or 32A to 32D) can be reduced. Thus, the sensor 5 according to the one embodiment can reduce a loss of signals passing through the respective transmission lines. In the sensor 5 according to the one embodiment, the transmission lines need detour on the substrate. Thus, the sensor 5 according to the one embodiment can have a smaller mounting area of the transmission lines on the substrate and make it easier to reduce the size of the device.

### Another embodiment is described.

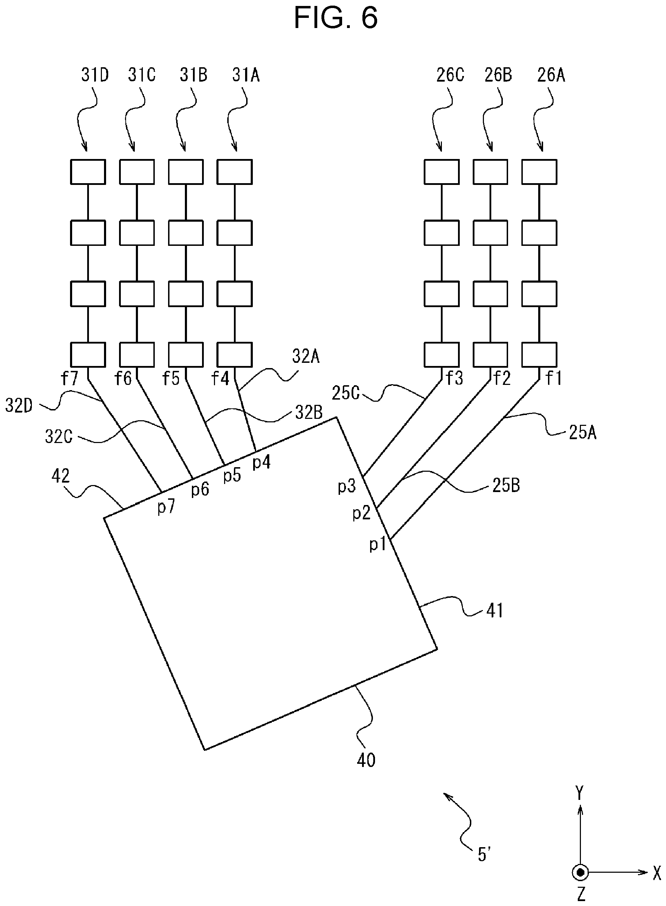

FIG. 6 is a diagram illustrating a configuration example of a sensor according to another embodiment. Specifically, FIG. 6 is a diagram illustrating an example of the arrangement of the multiple transmission antennas 26, the multiple reception antennas 31, and the electronic component 40 in an electronic device (sensor) according to another embodiment.

As illustrated in FIG. 6, a sensor 5' according to the another embodiment is different from the sensor 5 illustrated in FIG. 5 in that the installation manner of the electronic component 40 is changed. In the sensor 5 illustrated in FIG. 5, the first edge 41 of the electronic component 40 is an edge in the substantially vertical direction, that is, an edge substantially parallel to the Y-axis direction illustrated in FIG. 5. In the sensor 5 illustrated in FIG. 5, the first edge 41 of the electronic component 40 is an edge in the substantially horizontal direction, that is, an edge substantially parallel to the X-axis direction illustrated in FIG. 5. On the other hand, in the sensor 5' illustrated in FIG. 6, the first edge 41 of the electronic component 40 may be an edge in an oblique direction, that is, an edge that is parallel to neither the X-axis direction nor the Y-axis direction illustrated in FIG. 6. In the sensor 5' illustrated in FIG. 6, the first edge 41 of the electronic component 40 may be an edge in an oblique direction, that is, an edge that is parallel to neither the X-axis direction nor the Y-axis direction illustrated in FIG. 6.

As a result of the change in the installation manner of the electronic component 40, lengths of the transmission lines (25A to 25C and/or 32A to 32D) may be slightly changed in the sensor 5' illustrated in FIG. 6. For example, the transmission lines (25A to 25C and/or 32A to 32D) illustrated in FIG. 6 may be shorter than the transmission lines (25A to 25C and/or 32A to 32D) illustrated in FIG. 5.

Other than the foregoing, the sensor 5' according to the another embodiment can be configured in the same manner as the sensor 5 illustrated in FIG. 5. Thus, the same or similar description as that of the sensor 5 illustrated in FIG. 5 is appropriately simplified or omitted.

As described above, in the sensor 5' illustrated in FIG. 6, the electronic component 40 is obliquely mounted. This may allow the transmission lines that connect the electronic component 40 to the transmission antennas 26 and/or the reception antennas 31 to be further shortened. Thus, the sensor 5' illustrated in FIG. 6 can reduce a loss of signals passing through the respective transmission lines. In the sensor 5' illustrated in FIG. 6, the transmission lines need not detour on the substrate. Thus, the sensor 5' illustrated in FIG. 6 can have a smaller mounting area of the transmission lines on the substrate and makes it easier to reduce the size of the device.

Suppose that an amount of phase shift at the transmission terminal p1 is 0 deg., an amount of phase shift at the transmission terminal p2 is δ2' deg., and an amount of phase shift at the transmission terminal p3 is δ3' deg. (where δ3' > δ2', δ2 > δ2', and δ3 > δ3'). Suppose that an amount of phase shift at the reception terminal p4 is 0 deg., an amount of phase shift at the reception terminal p5 is δ5' deg., an amount of phase shift at the reception terminal p6 is δ6' deg., and an amount of phase shift of the reception terminal p7 is δ7 deg. (where δ5' > δ6' > δ7, δ5 > δ5', and δ6 > δ6'). By setting the amounts of phase shift above as initial values and varying the phase differences between the signals at the multiple transmission antennas 26, the sensor 5' according to the one embodiment can obtain the desired directivity of the transmission waves. Likewise, the sensor 5' according to the one embodiment can estimate the direction of arrival of the reflected waves with the multiple reception antennas 31.

As described above, in the one embodiment, at least one of the first edge 41 or the second edge 42 may be located obliquely relative to at least one of a direction in which the respective feeding points (f1 to f3) of the multiple transmission antennas 26 are arranged or a direction in which the respective feeding points (f4 to f7) of the multiple reception antennas 31 are arranged.

A variation of the above-described embodiment is described.

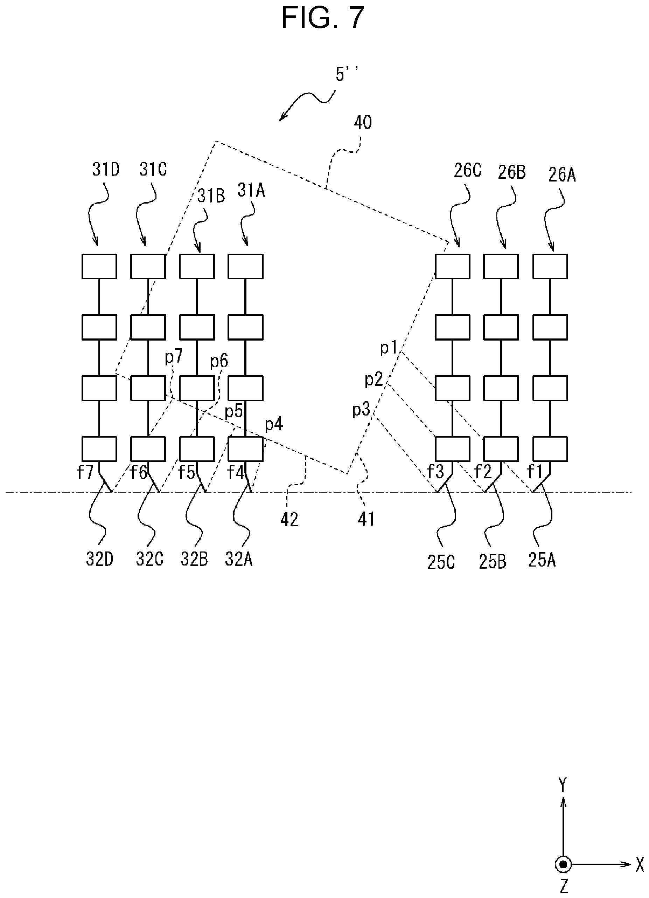

FIG. 7 is a diagram illustrating a variation of the sensor 5' illustrated in FIG. 6. Specifically, FIG. 7 is a diagram illustrating an example of the arrangement of the multiple transmission antennas 26, the multiple reception antennas 31, and the electronic component 40 in a variation of the sensor 5' illustrated in FIG. 6.

For example, in FIGs. 5 and 6, the description has been given on the assumption that the multiple transmission antennas 26 and the multiple reception antennas 31 are disposed on the same surface as the electronic component 40. As described above, in the sensor according to the one embodiment, the multiple transmission antennas 26 and the multiple reception antennas 31 may be disposed on a surface on an identical side to a surface on which the electronic component 40 is disposed (for example, on a surface facing the positive Z-axis direction).

However, as in a sensor 5" illustrated in FIG. 7, the multiple transmission antennas 26 and the multiple reception antennas 31 may be disposed on a surface different from a surface on which the electronic component 40 is disposed. In the sensor 5" illustrated in FIG. 7, the multiple transmission antennas 26 and the multiple reception antennas 31 are disposed on a front surface side (a surface facing the positive Z-axis direction illustrated in FIG. 7) of a planar substrate. On the other hand, in the sensor 5" illustrated in FIG. 7, the electronic component 40 is disposed on a back surface side (a surface facing the negative Z-axis direction illustrated in FIG. 7) of the planar substrate. As described above, in the sensor according to one embodiment, the multiple transmission antennas 26 and the multiple reception antennas 31 may be disposed on a surface (for example, the surface facing the positive Z-axis direction) on an opposite side to a surface (for example, the surface facing the negative Z-axis direction) on which the electronic component 40 is disposed.

In the sensor 5" illustrated in FIG. 7, each of the transmission lines (25A to 25C and/or 32A to 32D) may be folded from one surface to the other surface or may pass through a through hole of the substrate.

While the present disclosure has been described based on the various drawings and the embodiments, it is to be noted that a person skilled in the art can easily make various variations or corrections based on the present disclosure. Therefore, it is to be noted that these variations or corrections are within the scope of the present disclosure. For example, functions and the like included in each functional unit can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Therefore, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, multiple functional units, means, steps, or the like may be combined into one or may be divided. The embodiments of the present disclosure described above are not limited to strict implementation according to the respective embodiments described above, and may be implemented by appropriately combining the features or omitting part thereof.

For example, in FIG. 2, the example has been described in which the transmission unit 20 includes the phase control units 23 and the reception units 30 includes the respective phase control units 34. However, the phase control units 23 and the phase control units 34 may be provided at any positions where the phase control units 23 and the phase control units 34 can control (adjust) the phases of the transmission signals and the reception signals. For example, the phase control units 23 may be provided at any position in the transmission unit 20. For example, the phase control units 34 may be provided at any position in the respective reception units 30, or may be provided in, for example, a controller or the like at a subsequent stage of the AD conversion unit 37. In the embodiments described above, the description has been given on the assumption that the electronic component 40 includes the phase control units 23 and the phase control units 34. However, the phase control units 23 and the phase control units 34 may be provided outside the electronic component 40.

The embodiments described above are not limited to implementation as the electronic device (the sensor 5). For example, the embodiments described above may be implemented as a method for controlling a device such as the electronic device (the sensor 5). For example, the embodiments described above may be implemented as a program for controlling a device such as the electronic device (the sensor 5).

The electronic device according to one embodiment may include, as the minimum configuration, at least part of at least one of the sensor 5 or the controller 10, for example. On the other hand, the electronic device according to one embodiment may appropriately include at least any of the signal generating unit 21, the synthesizer 22, the phase control units 23, the amplifiers 24, or the transmission antennas 26 illustrated in FIG. 2 in addition to the controller 10. The electronic device according to the one embodiment may appropriately include at least any of the reception antenna 31, the LNA 33, the phase control unit 34, the mixer 35, the IF unit 36, or the AD conversion unit 37 instead of or along with the functional units described above. The electronic device according to the one embodiment may include a memory of any type. As described above, the electronic device according to the one embodiment can employ various configurations. When the electronic device according to the one embodiment is mounted in the mobility device 100, for example, at least any of the functional units described above may be installed at an appropriate place such as the inside of the mobility device 100. On the other hand, in one embodiment, for example, at least any of the transmission antennas 26 and the reception antennas 31 may be installed outside the mobility device 100.

### REFERENCE SIGNS

- 1: electronic device
- 5: sensor
- 10: controller
- 11: distance FFT processing unit
- 12: velocity FFT processing unit
- 13: angle-of-arrival estimating unit
- 14: object detecting unit
- 20: transmission unit
- 21: signal generating unit
- 22: synthesizer
- 23: phase control unit
- 24: amplifier
- 25: transmission line
- 26: transmission antenna
- 30: reception unit
- 31: reception antenna
- 32: transmission line
- 33: LNA
- 34: phase control unit
- 35: mixer
- 36: IF unit
- 37: AD conversion unit
- 40: electronic component
- 60: ECU
- 100: mobility device
- 200: object

## Claims

1. An electronic device comprising:
a plurality of transmission antennas each configured to transmit a transmission wave;
a plurality of reception antennas each configured to receive a reflected wave that is the transmission wave having been reflected; and
an electronic component configured to output respective transmission signals to the plurality of transmission antennas and receive respective reception signals from the plurality of reception antennas, wherein
the electronic component has a first edge where a plurality of transmission terminals each configured to output a respective one of the transmission signals to a respective one of the plurality of transmission antennas is arranged, and a second edge where a plurality of reception terminals each configured to receive a respective one of the reception signals from a respective one of the plurality of reception antennas is arranged, and
at least one of the first edge or the second edge is located obliquely relative to at least one of a direction in which respective feeding points of the plurality of transmission antennas are arranged or a direction in which respective feeding points of the plurality of reception antennas are arranged.

2. The electronic device according to claim 1, wherein the respective feeding points of the plurality of transmission antennas are each connected to a respective one of the plurality of transmission terminals by a transmission line, and the respective feeding points of the plurality of reception antennas are each connected to a respective one of the plurality of reception terminals by a transmission line.

3. The electronic device according to claim 2, wherein the respective feeding points of the plurality of transmission antennas are each connected to the respective one of the plurality of transmission terminals by the transmission line with a shortest path.

4. The electronic device according to claim 2 or 3, wherein the respective feeding points of the plurality of reception antennas are each connected to the respective one of the plurality of reception terminals by the transmission line with a shortest path.

5. The electronic device according to claim 2, wherein the electronic component is configured to adjust a phase of at least one of each of the transmission signals to be output from a respective one of the plurality of transmission terminals or each of the reception signals input to a respective one of the plurality of reception terminals.

6. The electronic device according to claim 5, wherein the electronic component is configured to adjust the phase of each of the transmission signals to be output from the respective one of the plurality of transmission terminals, in accordance with a length of the transmission line from the respective one of the plurality of transmission terminals to a respective one of the feeding points of the plurality of transmission antennas.

7. The electronic device according to claim 6, wherein the electronic component is configured to adjust the phase of each of the transmission signals to be output from the respective one of the plurality of transmission terminals such that the transmission signals are in phase at the respective feeding points of the plurality of transmission antennas.

8. The electronic device according to any of claims 5 to 7, wherein the electronic component is configured to adjust the phase of each of the reception signals input to the respective one of the plurality of reception terminals, in accordance with a length of the transmission line from a respective one of the feeding points of the plurality of reception antennas to the respective one of the plurality of reception terminals.

9. The electronic device according to claim 8, wherein the electronic component is configured to adjust the phase of each of the reception signals such that the reception signals each input to the respective one of the plurality of reception terminals are in phase.

10. The electronic device according to any of claims 1 to 9, wherein the direction in which the respective feeding points of the plurality of transmission antennas are arranged and the direction in which the respective feeding points of the plurality of reception antennas are arranged are parallel to each other.

11. The electronic device according to any of claims 1 to 10, wherein the first edge and the second edge of the electronic component are not parallel to each other.

12. The electronic device according to any of claims 1 to 11, wherein the plurality of transmission antennas and the plurality of reception antennas are disposed on a surface on an identical side to a surface on which the electronic component is disposed.

13. The electronic device according to any of claims 1 to 11, wherein the plurality of transmission antennas and the plurality of reception antennas are disposed on a surface on an opposite side to a surface on which the electronic component is disposed.

14. The electronic device according to any of claims 1 to 13, wherein the electronic device is configured to detect an object that reflects the transmission wave, based on the transmission signals each transmitted as the transmission wave and the reception signals each received as the reflected wave.
